# FASCICULE DE BREVET EUROPEEN

(11) **EP 4 224 133 B1**
(45) Date de publication et mention de la délivrance du brevet: **17.07.2024**
(21) Numéro de dépôt: 23150193.3
(22) Date de dépôt: 03.01.2023
(51) Int. Cl.: G01M 1/16, G01M 1/36, G01M 7/04

(54) **SIMULATEUR DE BALOURD D'UN ROTOR ET BANC D'ESSAI MUNI DE CE SIMULATEUR**
UNWUCHTSIMULATOR FÜR EINEN ROTOR UND PRÜFSTAND MIT EINEM SOLCHEN
UNBALANCE SIMULATOR OF A ROTOR AND TEST BENCH WITH THIS SIMULATOR

(30) Priorité: 02.02.2022 FR 2200910
(43) Date de publication de la demande: 09.08.2023
(73) Titulaire: Airbus Helicopters, 13725 Marignane Cedex (FR)
(72) Inventeur: JAUFFRET, Laurent, 13880 VELAUX (FR)
(74) Mandataire: GPI Brevets

(56) Documents cités:
- CN-A- 106 611 553
- CN-A- 108 956 068
- CN-A- 111 947 835
- CN-A- 113 280 979
- FR-A1- 3 005 095
- GB-A- 2 457 060

## Description

La présente invention concerne un simulateur de balourd d'un rotor et un banc d'essai muni de ce simulateur.

Un système mécanique peut comporter une structure porteuse portant un rotor, voire mettant en mouvement le rotor ou mise en mouvement par le rotor. En utilisation, une pale est susceptible d'être dégradée et de générer soudainement un balourd du rotor. Il peut être utile, voire requis, d'évaluer la capacité de la structure porteuse à supporter l'apparition soudaine d'un tel balourd.

En particulier, un giravion comporte une structure porteuse portant au moins un rotor de type voilure tournante. Une telle structure porteuse peut comprendre une boîte de transmission de puissance munie d'un mât mettant en rotation le rotor et des moyens connectant la boîte de transmission de puissance à une cellule.

Selon un autre exemple, un aéronef peut comprendre une structure porteuse portant un rotor de type hélice.

Selon un autre exemple, un moteur ou un générateur peut comprendre une structure porteuse portant un rotor de type compresseur ou turbine muni de pales. Dans ce cadre, les pales sont parfois dénommées « aubes ».

Ainsi, le terme « rotor » peut désigner ici un ensemble tournant pourvu d'au moins une pale, tel que par exemple une hélice, une voilure tournante ou un compresseur, voire une turbine. L'expression « structure porteuse » désigne la structure portant l'ensemble tournant, la structure porteuse pouvant éventuellement de plus mettre en mouvement l'ensemble tournant ou être mise en mouvement par l'ensemble tournant.

Le rotor peut accidentellement être impacté par un projectile, et par exemple par un oiseau, un fragment de pneu, un glaçon ou autres. Un tel impact peut engendrer le détachement d'un fragment de pale. Le détachement d'une partie d'une pale peut induire soudainement un balourd, à savoir un déséquilibrage du rotor. Ce déséquilibrage peut induire des vibrations dans la structure porteuse. Certains règlements peuvent requérir de démontrer que la structure porteuse est à même de supporter de telles vibrations. En particulier, il peut être requis de démontrer que les fixations du rotor à la structure porteuse et/ou que les fixations de la structure porteuse à une cellule ne rompent pas suite à un impact entre une pale et un projectile. En effet, un balourd apparaissant soudainement peut être plus endommageant pour une structure porteuse qu'un balourd qui apparait de manière lente et progressive.

Il peut être délicat de mettre en place un test afin de démontrer qu'une structure porteuse est à même de supporter les vibrations qui apparaissent lorsque le rotor présente un balourd, notamment soudainement suite à un impact sur une pale.

A cet effet, un système d'essais peut comprendre un banc muni d'une armature attachée à la structure porteuse à tester. Le système d'essais comporte une motorisation adaptée pour mettre en mouvement des organes internes de la structure porteuse, et par suite le rotor. Le système d'essais comporte de plus un système destructif permettant de détériorer une pale du rotor lors de son entraînement en rotation par la structure porteuse. Un tel système destructif peut comporter des charges pyrotechniques provoquant un détachement de matière d'une pale ou peut comporter un système de projection d'un projectile vers une pale en rotation.

Un tel système d'essais est efficace en simulant une rupture réelle d'une pale. Toutefois, le système d'essais induit des coûts récurrents importants puisqu'il s'avère de fait destructif en induisant une casse réelle d'une pale, voire de la structure porteuse en cas d'échec de l'essai. De plus, sa mise en oeuvre est évidemment délicate en nécessitant des moyens pyrotechniques ou des moyens de projection de projectiles.

Si plusieurs essais doivent être réalisés, un tel système d'essais implique de changer à chaque essai les éléments cassés lors de l'essai précédent. Il en résulte un coût non négligeable.

Le document US 7845207 est éloigné de la problématique en décrivant un système pour tester notamment des pales.

Les documents CN 111 947 835 A, CN 108 956 068 A, CN 106 61 1 553 A, CN 1 13 280 979 A, FR 3 005 095 A1, et GB 2 457 060 A sont aussi connus.

La présente invention a alors pour objet de proposer un simulateur afin de tester une structure porteuse en simulant la présence d'un ensemble tournant présentant soudainement un balourd, ce balourd étant réglable. La structure porteuse peut en outre comprendre au moins un engrenage pour mettre en rotation un rotor réel ou être mise en mouvement par un tel rotor.

La présente invention vise ainsi un simulateur de balourd soudain, voire paramétrable, d'un rotor. Ce simulateur comporte un porteur configuré pour effectuer un mouvement rotatif autour d'un axe de rotation, le simulateur ayant au moins une masselotte mobile le long d'un chemin par rapport au porteur entre une position initiale et une position finale, la position finale étant éventuellement réglable. Une distance séparant radialement la masselotte de l'axe de rotation, à savoir orthogonalement à l'axe de rotation, varie entre la position initiale et la position finale. Le simulateur a un bloqueur commandé immobilisant sur requête ladite masselotte par rapport au porteur dans la position initiale, ledit simulateur ayant une butée, par exemple le long dudit chemin, ladite butée bloquant la masselotte dans la position finale suite à un déplacement de la masselotte provoquée par une force centrifuge lorsque simultanément le porteur est en rotation autour de l'axe de rotation et ledit bloqueur libère la masselotte. Ladite butée bloque la masselotte soit directement par interférence avec la masselotte soit indirectement par interférence entre la masselotte et un organe mobile conjointement avec la masselotte.

Le bloqueur peut être commandé par une interface homme-machine de commande communiquant par une liaison filaire et/ou sans fil avec le bloqueur.

Dès lors, le simulateur dans son ensemble peut être configuré pour être représentatif du rotor réel à tester, par exemple en termes de masse, de moments d'inertie, et/ou de moments statiques. Le simulateur dans son ensemble peut être configuré pour présenter, lorsque la masselotte est dans sa position initiale, un centre de gravité localisé au même endroit que le centre de gravité du rotor réel.

Par suite, le simulateur peut être monté, préalablement à un essai, sur la structure porteuse à tester à la place du rotor réel. Le simulateur et le cas échéant la structure porteuse sont ensuite mis en mouvement. Pour tester les effets d'un balourd soudain du simulateur et donc du rotor réel simulé sur la structure porteuse, un opérateur manipule une interface homme-machine de commande pour commander le bloqueur afin de libérer la masselotte. Sous l'effet de la force centrifuge, la masselotte se déplace soudainement jusqu'à sa position finale. Le simulateur présente alors soudainement un balourd et l'opérateur peut évaluer, par exemple à l'aide de senseurs usuels, les conséquences de ce balourd sur la structure porteuse et/ou ses fixations.

En réglant des caractéristiques physiques de la masselotte et/ou de la butée et/ou d'un guide de la masselotte, le simulateur permet de réaliser des tests successifs pour évaluer le comportement vibratoire de la structure porteuse en présence de divers balourds qui apparaissent soudainement. Le simulateur peut permettre d'obtenir dans un premier temps un balourd soudain engendrant de faibles vibrations dans la structure porteuse, ces vibrations n'étant pas susceptibles de détériorer la structure porteuse et/ou ses fixations. L'opérateur peut alors modifier les réglages de la masselotte et/ou de la butée et/ou d'un guide de la masselotte pour obtenir, au fur et à mesure des essais successivement réalisés, des vibrations plus importantes.

Le simulateur permet ainsi de quantifier les marges structurelles de la structure porteuse et/ou de ses fixations, en fonction d'exigences. En effet, ce balourd peut évoluer au fur et à mesure des essais jusqu'à un balourd se produisant dans les conditions spécifiées dans un règlement ou une spécification pour quantifier lesdites marges, voire dans des conditions plus défavorables que lesdites conditions spécifiées.

De plus, le simulateur ne présente pas de risques liés à son utilisation, contrairement de fait à un système pyrotechnique ou à un système projetant des projectiles.

Ainsi, le simulateur peut être qualifié de réversible contrairement à un système pyrotechnique ou à un lanceur de projectiles qui endommage définitivement une pale. A la fin d'un essai, l'opérateur peut arrêter la rotation du simulateur et remettre la masselotte dans sa position initiale pour réaliser un autre essai.

En outre, le simulateur permet de réaliser des essais successifs non destructifs pour réaliser une étude vibratoire progressive.

Le simulateur peut notamment comporter une ou plusieurs des caractéristiques qui suivent.

Selon une possibilité, le porteur peut comporter une glissière formant ledit chemin.

Le déplacement de la masselotte est donc bien guidé en translation au sein du simulateur.

Selon une possibilité compatible avec les précédentes, le simulateur peut comporter un couvercle fixé au porteur pour fermer ladite glissière.

La masselotte ne risque alors pas d'être éjectée en dehors du simulateur durant un essai.

Selon une possibilité compatible avec les précédentes, le simulateur peut comporter au moins un bras de guidage mobile par rapport au porteur et connecté à la masselotte.

Le ou les bras de guidage guident la masselotte de sa position initiale à sa position finale suite à sa libération, par exemple en suivant un chemin en arc de cercle.

Par exemple, ledit bras de guidage est mobile en rotation autour d'un axe de pivotement décalé par rapport à l'axe de rotation, voire parallèle à l'axe de rotation.

Eventuellement, une position dudit axe de pivotement par rapport à l'axe de rotation est réglable. Par exemple, le bras de guidage est mobile en rotation autour d'un pion, ce pion pouvant être attaché à divers endroits du porteur et du bras de guidage. Cette caractéristique peut permettre de régler le balourd obtenu.

Selon un autre exemple, le système de guidage peut comprendre plusieurs bras de guidage, la masselotte pouvant suivre un chemin rectiligne ou plus complexe en fonction de la géométrie des bras.

Selon une possibilité compatible avec les précédentes, l'axe de rotation peut traverser la masselotte dans la position initiale.

La masselotte, voire son centre de gravité, peuvent alors être situés sensiblement sur l'axe de rotation dans la position initiale.

Selon une possibilité compatible avec les précédentes, le centre de gravité de la masselotte peut au contraire être décalé par rapport à l'axe de rotation, par exemple pour que le centre de gravité du simulateur soit présent sur l'axe de rotation. La masselotte participe alors à l'équilibrage du simulateur, avant libération de cette masselotte, au regard de la position de la butée par exemple.

Selon une possibilité compatible avec les précédentes, le simulateur peut comporter au moins une masse d'équilibrage permettant de régler une position d'un centre de gravité de ce simulateur.

Par exemple, le porteur peut comprendre une découpure d'équilibrage dans le prolongement d'un chemin ménagé dans le porteur, au moins une masse d'équilibrage pouvant être positionnée précisément dans la découpure d'équilibrage. La position de la masse d'équilibrage par rapport à l'axe de rotation peut être réglable manuellement ou avec un actionneur d'équilibrage. L'ensemble découpure d'équilibrage/masse d'équilibrage peut être sensiblement symétrique à l'ensemble chemin/butée par rapport à l'axe de rotation.

Selon une possibilité compatible avec les précédentes, le bloqueur peut comporter une goupille, ladite goupille s'étendant dans un premier orifice du porteur et un deuxième orifice de la masselotte dans la position initiale.

Une simple goupille mobile en translation peut immobiliser la masselotte et la libérer sur commande.

Selon une possibilité compatible avec les précédentes, le bloqueur peut comporter un actionneur de libération relié à la goupille et configuré pour mettre en translation sur requête ladite goupille par rapport au porteur.

L'actionneur de libération peut être un actionneur dédié ou peut comprendre une liaison mécanique liant la goupille à un système mobile de la structure porteuse, par exemple à un système de plateaux cycliques ou une servocommande usuelle de modification du pas d'au moins une pale du rotor.

Selon une possibilité compatible avec les précédentes, ladite goupille peut s'étendre le long d'un axe de libération parallèle à l'axe de rotation, voire confondu avec l'axe de rotation.

La goupille s'oppose alors à un mouvement de la masselotte sous l'effet de la force centrifuge, tant que la goupille est en place en pénétrant dans la masselotte.

Selon une possibilité compatible avec les précédentes, le simulateur peut comporter un jeu de stoppeurs, ledit jeu de stoppeurs comprenant plusieurs stoppeurs différents, ladite butée utilisée lors d'un test étant un desdits stoppeurs.

Les divers stoppeurs peuvent notamment avoir des raideurs et/ou des coefficients d'amortissement différents selon au moins un axe, pour obtenir des effets différents sur la structure porteuse.

Selon une possibilité compatible avec les précédentes, ladite butée peut avoir une position réglable par rapport au porteur.

L'expression « ladite butée peut avoir une position réglable par rapport au porteur » signifie qu'au moins une face de la butée susceptible d'entrer en contact avec la masselotte ou avec un organe mobile conjointement avec la masselotte, tel qu'un bras de guidage précité, est déplaçable par rapport au porteur manuellement ou via un actionneur.

Selon une possibilité compatible avec les précédentes, ledit porteur peut comporter au moins un ensemble d'emplacements de fixation comprenant plusieurs emplacements de fixation alignés, par exemple parallèlement à un axe radial, ladite butée comportant au moins une fixation de blocage apte à être connectée à chaque emplacement de fixation.

Par exemple, le porteur peut avoir deux ensembles d'emplacements aptes à coopérer respectivement avec deux fixations de blocage de la butée. Un operateur peut alors changer la position de la butée en la fixant à d'autres emplacements de fixation pour faire varier le balourd obtenu entre deux essais.

Les fixations de blocage de la butée peuvent comprendre, des pions pénétrant dans des orifices du porteur, ou au moins un orifice de fixation de la butée et un moyen, par exemple de vissage, traversant à la fois un orifice de fixation de la butée et un orifice du porteur.

Alternativement, ledit simulateur peut comporter un actionneur de déplacement relié à ladite butée et configuré pour déplacer ladite butée par rapport au porteur.

Le déplacement de la butée est alors motorisé pour réaliser aisément des essais successifs dans des conditions différentes.

Le cas échéant, le simulateur peut comprendre un actionneur d'équilibrage coopérant avec une masse d'équilibrage L'ensemble découpure d'équilibrage/masse d'équilibrage/actionneur d'équilibrage peut être sensiblement symétrique à l'ensemble chemin/butée/actionneur de déplacement par rapport à l'axe de rotation.

L'invention vise aussi un banc d'essais pour tester une structure porteuse apte à porter un rotor susceptible de présenter un balourd. Ce banc d'essais comporte une armature configurée pour être attachée à la structure porteuse, le banc d'essais comportant un simulateur selon l'invention installé sur la structure porteuse à tester à la place dudit rotor.

Le banc d'essais peut comprendre une motorisation configurée pour mettre en mouvement au moins un engrenage de ladite structure porteuse.

L'invention vise aussi un procédé pour tester une structure porteuse apte à porter un rotor susceptible de présenter un balourd.

Ce procédé comporte les étapes suivantes :
- fixation de la structure porteuse à une armature d'un banc d'essais du type précédemment décrit,
- fixation du simulateur à la structure porteuse en lieu et place du rotor, mise en rotation du simulateur, puis
- libération de la masselotte par rapport au porteur en sollicitant le bloqueur.

Le procédé peut en outre comporter une étape de réglage d'une position de la butée par rapport au porteur.

L'invention et ses avantages apparaîtront avec plus de détails dans le cadre de la description qui suit avec des exemples donnés à titre illustratif en référence aux figures annexées qui représentent :
la figure 1, une coupe d'un exemple de simulateur,
la figure 2, une vue de dessus du simulateur de la figure 1,
la figure 3, une coupe d'un exemple de simulateur,
la figure 4, une vue de dessus du simulateur de la figure 3,
la figure 5, une coupe d'un exemple de simulateur,
la figure 6, une vue de dessus du simulateur de la figure 5,
la figure 7, une vue d'un banc d'essais muni du simulateur selon la figure 3 explicitant le procédé de l'invention avant création d'un balourd, et
la figure 8, une vue du banc d'essais de la figure 7 explicitant le procédé de l'invention après création d'un balourd.

Les éléments présents dans plusieurs figures distinctes sont affectés d'une seule et même référence.

Trois directions X, Y et Z orthogonales les unes par rapport aux autres sont représentées sur les figures.

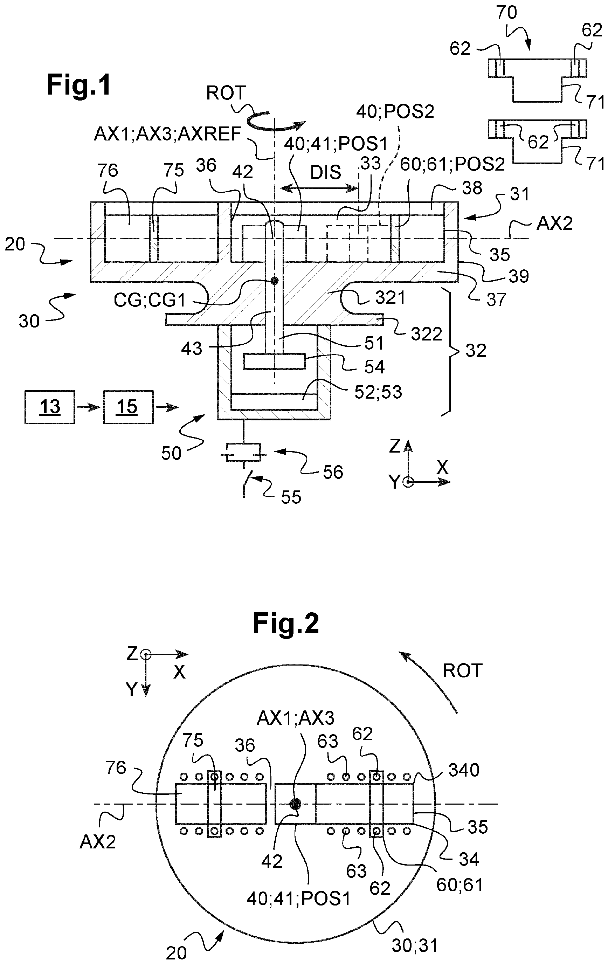

Les figures 1 à 6 présentent un simulateur 20 permettant de simuler le balourd soudain d'un rotor agencé sur une structure porteuse afin d'étudier les conséquences de ce balourd sur une structure porteuse.

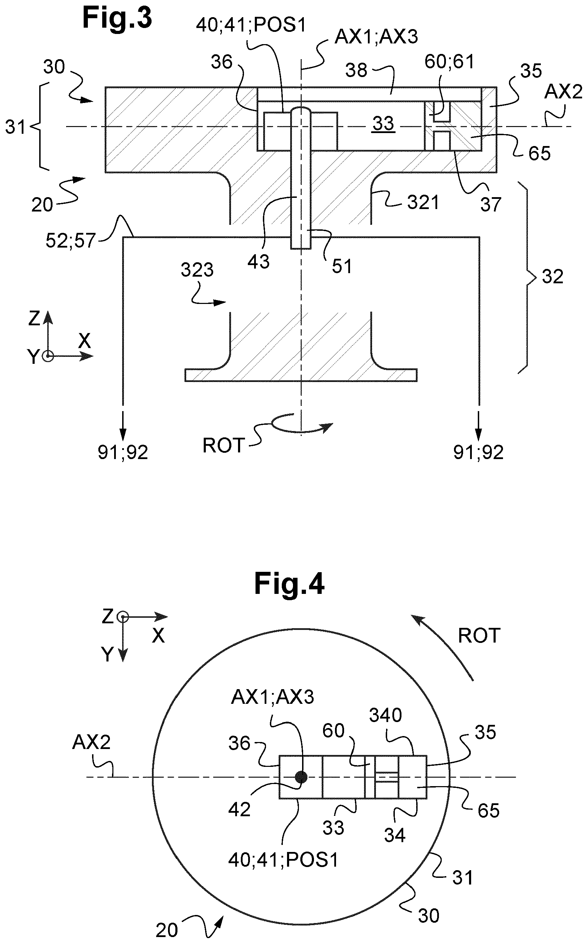

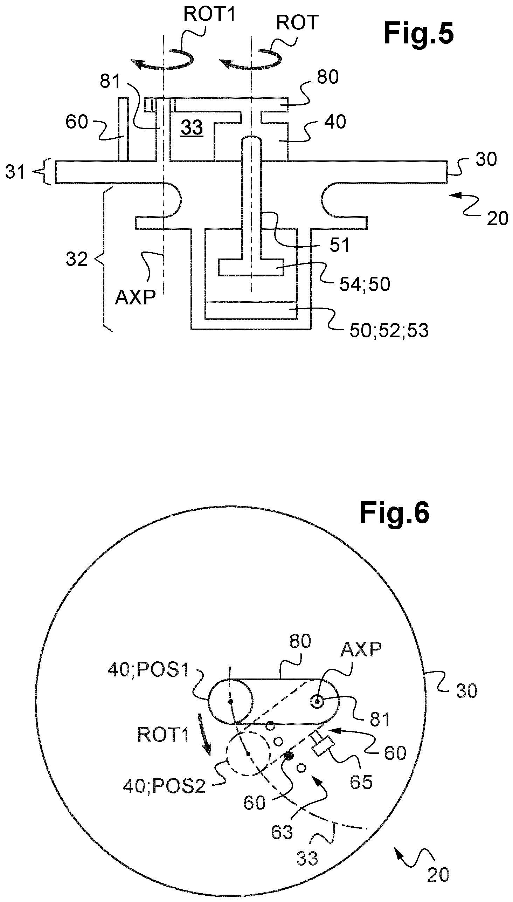

Les figures 1 et 2 présentent respectivement une vue en coupe en élévation et une vue de dessus d'un exemple de simulateur 20, les figures 3 et 4 présentant respectivement une vue en coupe en élévation et une vue de dessus d'un autre exemple de simulateur 20, les figures 5 et 6 présentant respectivement une vue en coupe en élévation et une vue de dessus d'un autre exemple de simulateur 20.

Quelle que soit la réalisation et en référence à la figure 1, un simulateur 20 comporte un porteur 30. Le porteur 30 est configuré pour effectuer un mouvement rotatif ROT autour d'un axe de rotation AX1.

Par exemple, le porteur 30 comporte une partie principale 31 solidaire d'une partie secondaire 32. La partie principale 31 et la partie secondaire 32 peuvent former une seule et même pièce. La partie principale 31 est configurée pour participer à la génération du balourd requis alors que la partie secondaire 32 est notamment configurée pour permettre d'attacher le simulateur 20 à la structure porteuse à tester, en lieu et place d'un rotor apte à présenter un balourd suite par exemple à un impact avec un projectile. Par exemple, la partie principale 31 a une forme de disque. Par exemple, la partie secondaire 32 comporte un pied 321 qui s'étend de la partie principale 31 jusqu'à une collerette de fixation 322.

Le porteur 30 peut par ailleurs délimiter en tout ou partie un chemin 33, à savoir un espace dans lequel une masselotte 40 peut se déplacer.

Selon les exemples des figures 1 à 4, le chemin 33 s'étend le long d'un axe radial AX2, à savoir un axe orthogonal à l'axe de rotation AX1.

Dès lors, le porteur 30 comporte une glissière 39 délimitant le chemin 33 selon une pluralité de sens. Le cas échéant, le chemin 33 est ménagé dans la partie principale 31. Le chemin 33 peut être obtenu par exemple par usinage du porteur 30.

Par exemple, le porteur 30 comporte deux parois d'extrémités 35, 36 délimitant le chemin 33 selon deux sens opposés de l'axe radial AX2, deux parois latérales 340, 34 délimitant le chemin 33 selon deux sens opposés et selon un axe orthogonal à l'axe radial AX2 et à l'axe de rotation AX1 tel qu'illustré sur la figure 2, et une paroi inférieure 37 délimitant le chemin 33 selon un premier sens parallèle à l'axe de rotation AX1. En référence à la figure 1, le simulateur 20 peut comprendre un couvercle 38 fermant le chemin 33 selon un deuxième sens parallèle à l'axe de rotation AX1 et opposé au premier sens précité.

Selon l'exemple des figures 5 et 6, le chemin 33 peut s'étendre au moins partiellement voire totalement en dehors du porteur 30. Toutefois, alternativement le porteur 30 pourrait comprendre une glissière 39 délimitant au moins partiellement ce chemin 33.

Indépendamment de la manière d'obtenir un espace creux formant un chemin 33 et en référence à nouveau à la figure 1, le simulateur 20 est muni d'au moins une masselotte 40 mobile par rapport au porteur entre une position initiale POS1 illustrée en traits pleins atteinte à l'initialisation de l'essai et une position finale POS2 illustrée avec des pointillés atteinte à la création du balourd voulu.

Une distance DIS entre la masselotte 40 et l'axe de rotation est différente lorsque la masselotte 40 est dans la position initiale POS1 ou la position finale POS2. Par exemple, cette distance DIS est mesurée entre l'axe de rotation AX1 et un axe de référence AXREF. Cet axe de référence AXREF est parallèle à l'axe de rotation AX1 et passe par un point ou une zone caractéristique de la masselotte 40, et par exemple par le centre de gravité de la masselotte 40.

Selon les exemples des figures 1 à 4, une masselotte 40 est mobile en translation le long du chemin 33 par rapport au porteur 30 selon l'axe radial AX2.

Par exemple, la masselotte 40 a une forme complémentaire à la forme du chemin 33. A titre d'exemple, la masselotte 40 a une forme de cube 41, le chemin 33 ayant la forme d'un parallélépipède rectangle creux de section sensiblement complémentaire au cube.

Selon l'exemple des figures 5 et 6, une masselotte 40 est mobile en suivant un chemin courbe, voire en arc de cercle.

Par exemple, la masselotte 40 est articulée à un bras de guidage 80 ou solidaire d'un bras de guidage 80. Ce bras de guidage 80 est en outre mobile par rapport au porteur 30. Par exemple, ce bras de guidage 80 et la masselotte 40 sont conjointement mobiles en rotation ROT1 par rapport au porteur 30 autour d'un axe pivotement AXP. Par exemple, le bras de guidage 80 est mobile en rotation autour d'un doigt 81 connecté, voire solidarisé, au porteur 30, ce doigt 81 s'étendant le long de l'axe de pivotement AXP. Par exemple, l'axe de pivotement AXP est décalé par rapport à l'axe de rotation AX1, voire parallèle à l'axe de rotation AX1.

La position de l'axe de pivotement AXP peut être réglable. Par exemple, le porteur 30 et le bras de guidage 80 comportent divers renfoncements dans lequel le doigt 81 peut être agencé.

Indépendamment des aspects précédents et en référence à la figure 1, le simulateur 20 comporte un bloqueur 50. Le bloqueur 50 a pour fonction d'immobiliser la masselotte 40 dans une position initiale POS1, et de libérer sur commande la masselotte 40. Après sa libération et le simulateur 20 tournant, la masselotte 40 se déplace le long du chemin 33 sous l'effet de la force centrifuge jusqu'à une position finale POS2 illustrée avec des pointillés.

Lorsque la masselotte 40 se trouve dans la position initiale POS1, l'axe de rotation AX1 peut passer par la masselotte 40, voire éventuellement par le centre de gravité CG de la masselotte 40.

Pour immobiliser par défaut la masselotte 40, le bloqueur 50 peut comporter une goupille 51, à savoir un organe allongé apte à pénétrer, voire à traverser de part en part la masselotte 40.

Par exemple, la goupille 51 s'étend dans un premier orifice 43 du porteur 30 et un deuxième orifice 42 de la masselotte 40 dans la position initiale POS1. Par exemple, la goupille 51 s'étend le long d'un axe de libération AX3 parallèle à l'axe de rotation AX1, voire confondu avec l'axe de rotation AX1. Eventuellement, la goupille traverse de part en part selon l'axe de libération la masselotte 40 et/ou le porteur 30.

Pour déplacer la goupille 51 en dehors de la masselotte 40 afin de la libérer, le bloqueur 50 peut comporter un actionneur de libération 52.

L'actionneur de libération 52 est relié à la goupille 51 et configuré pour mettre en translation la goupille 51 par rapport au porteur 30, suite à la réception d'un signal de commande.

Par exemple, l'actionneur de libération 52 est à cet effet en communication avec une interface homme-machine de commande 13, directement ou via un contrôleur 15.

Selon l'exemple de la figure 1, l'actionneur de libération 52 comporte un électroaimant 53, la goupille 51 étant à l'inverse solidaire d'un organe 54 ferromagnétique en vis-à-vis de l'électroaimant 53. L'électroaimant 53 peut être relié à une source d'énergie électrique via un interrupteur 55 et un organe de liaison électrique 56 permettant de faire circuler un courant électrique d'un repère non tournant à un repère tournant. Un tel organe de liaison 56 peut par exemple comprendre un système à balais ou à induction voire un système optique usuel. Dès lors, l'interrupteur 55 peut au repos être ouvert. Par contre, l'interface homme-machine de commande 13 peut émettre un signal de commande engendrant la fermeture de l'interrupteur 55 afin que l'électroaimant 53 attire la goupille 51 vers lui par l'intermédiaire de l'organe 54 ferromagnétique pour libérer la masselotte 40. L'interrupteur 55 peut alternativement représenter une interface homme machine de commande manoeuvrable par un opérateur.

Selon l'exemple de la figure 3, l'actionneur de libération 52 peut comprendre au moins un bras de liaison 57 solidaire en translation de la goupille 51. Ce bras de liaison 57 peut traverser une fente 323 oblongue du porteur 30, et par exemple le cas échéant du pied 321. Le bras de liaison 57 peut alors être articulé par exemple à un ensemble de plateaux cyclique 92 ou une servocommande 91 éventuels.

Indépendamment des aspects précédents et en référence à la figure 1, le simulateur 20 comporte une butée 60. La butée 60 est configurée pour interrompre le déplacement de la masselotte 40 suite à sa libération.

Par ailleurs, la butée 60 peut être choisie parmi un jeu 70 de stoppeurs 71. De fait, le jeu 70 de stoppeurs 71 comprend plusieurs stoppeurs 71 différents. La butée 60 agencée sur le porteur 30 lors d'un essai est alors un des stoppeurs 71. Un opérateur peut choisir la butée 60 parmi ce jeu 70 de stoppeurs 71 pour obtenir un balourd particulier.

Selon les figures 1 à 4, la butée 60 peut comprendre une paroi 61 apte à bloquer le déplacement de la masselotte 40 suite à sa libération par le bloqueur 50. Par exemple, la paroi 61 a une forme complémentaire à la forme du chemin 33. A titre d'exemple, la paroi 61 a une section carrée ou rectangulaire orthogonalement à l'axe radial AX2, le chemin 33 ayant la forme d'un parallélépipède rectangle creux.

Par ailleurs, la butée 60 est immobilisée dans le chemin 33. Toutefois, la position radiale de la butée 60 par rapport à l'axe de rotation AX1 est réglable.

Selon la réalisation des figures 1 et 2 et tel qu'illustré sur la figure 2, le porteur 30 comporte au moins un ensemble d'emplacements de fixation 63. Un tel ensemble d'emplacements de fixation 63 comprend plusieurs emplacements de fixation 63 alignés parallèlement à l'axe radial AX2. En particulier, la figure 2 illustre une variante comprenant deux ensembles d'emplacements de fixation 63 situés de part et d'autre du chemin 33. La butée 60 comporte alors une fixation de blocage 62 par ensemble d'emplacements de fixation 63.

A titre d'exemple, chaque emplacement de fixation 63 peut comprendre un orifice d'immobilisation.

Dès lors, la butée 60 peut comprendre une fixation de blocage 62 munie d'un pion qui est configuré pour pénétrer dans un orifice d'immobilisation.

Selon un autre exemple, la butée 60 peut comprendre une fixation de blocage 62 munie d'un orifice de fixation afin qu'un lien de fixation puisse pénétrer à la fois dans un orifice de fixation et un orifice d'immobilisation. Eventuellement, un boulon ou un équivalent pénètre dans un orifice de fixation et un orifice d'immobilisation pour être vissé à un écrou ou au porteur afin de serrer la butée 60 contre le porteur 30.

Selon la réalisation des figures 3 et 4 et tel qu'illustré sur la figure 3 par exemple, le simulateur 20 peut comporter un actionneur de déplacement 65. Cet actionneur de déplacement 65 peut être relié à la butée 60 et configuré pour déplacer radialement la butée 60 le long dudit axe radial AX2. Par exemple, l'actionneur de déplacement 65 comporte un vérin électrique alimenté électriquement de manière usuelle, via un système permettant de transmettre un courant électrique d'un repère non tournant à un repère tournant.

Par exemple, l'actionneur de déplacement 65 est accolé à une paroi d'extrémité 35 délimitant le chemin 33.

La réalisation des figures 5 et 6 illustre une butée 60 rendue mobile par un actionneur de déplacement 65 et une butée 60 pouvant être agencée dans divers emplacements de fixation.

Indépendamment des aspects précédents et en référence aux figures 1 et 2 par exemple, le simulateur 20 peut comprendre au moins une découpure d'équilibrage 76 et/ou au moins une masse d'équilibrage 75 pour régler une position d'un centre de gravité CG de ce simulateur 20. Par exemple, la découpure d'équilibrage 76 peut être située dans le prolongement du chemin 33. Par exemple, une masse d'équilibrage 75 peut être mobile dans la découpure d'équilibrage 76, manuellement selon l'illustration ou via un actionneur d'équilibrage. Le cas échéant l'actionneur d'équilibrage peut être agencé symétriquement par rapport à un actionneur de déplacement de la butée.

La masselotte 40 peut de manière complémentaire ou alternative avoir dans la position initiale POS1 un centre de gravité CG1 décalé par rapport à l'axe de rotation AX1 à des fins d'équilibrage du simulateur 20.

Les réalisations des figures 3 à 6 peuvent aussi comprendre des masses d'équilibrage.

Quelle que soit la manière de réaliser un simulateur 20, un tel simulateur 20 peut être agencé au sein d'un banc d'essais 10 pour tester le comportement d'une structure porteuse 1 apte à porter un rotor susceptible de présenter un balourd. La structure porteuse 1 peut comprendre au moins un engrenage 2 pour mettre en mouvement le rotor ou être mis en mouvement par le rotor.

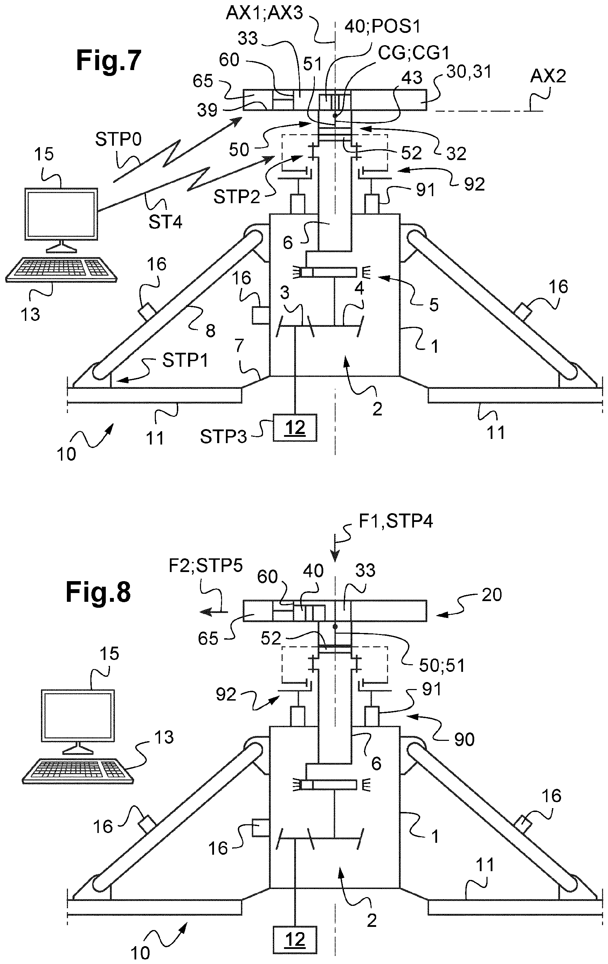

La figure 7 illustre un tel banc d'essais 10 muni d'un simulateur selon l'invention. La figure 7 illustre un simulateur particulier mais tout type de simulateur 20 selon l'invention est envisageable.

Le banc d'essais 10 comporte une armature 11 configurée pour être attachée à la structure porteuse 1 par des fixations. Le banc d'essais 10 peut comprendre de plus une motorisation 12 configurée pour mettre en mouvement au moins un engrenage 2 de la structure porteuse 1, soit directement soit via le simulateur 20.

Par exemple, la structure porteuse 1 est une boîte de transmission puissance. Les fixations à l'armature 11 peuvent comprendre des barres usuelles 8, et/ou des dispositifs 7 à lame ou autres. La boîte de transmission de puissance peut comprendre un pignon d'entrée 3 lié par une chaîne mécanique d'entrée à la motorisation 12. Le pignon d'entrée 3 peut engrener une grande roue 4 liée par une chaîne mécanique interne à un mât 6. La chaîne mécanique interne peut comprendre par exemple au moins un étage de réduction de vitesse épicycloïdal 5. Dès lors, le simulateur 20 peut être attaché au mât 6 à la place d'un rotor. Le cas échéant, la collerette 322 est fixée par des boulons ou des équivalents au mât 6. Le cas échéant, un bras de liaison 57 éventuel d'un actionneur de déplacement est connecté à un ensemble de plateaux cycliques 92 ou à une servocommande 91 tels qu'illustrés en pointillés.

La figure 7 illustre une structure porteuse de type boîte de transmission de puissance à titre d'exemple, mais cette structure porteuse pourrait être une structure porteuse d'une hélice, d'un compresseur ou d'une turbine par exemple.

Selon un autre aspect, le banc d'essais 10 peut comprendre au moins un senseur 16 pour surveiller le comportement de la structure porteuse 1 et/ou des fixations de la structure porteuse 1 à l'armature 11 ou au simulateur 20. Par exemple, de tels senseurs 16 peuvent comprendre des accéléromètres.

Le banc d'essais 10 peut comprendre une interface homme-machine de commande 13 pour piloter le fonctionnement de ce banc d'essais 10. Par exemple, l'interface homme-machine de commande 13 peut comprendre un clavier, une souris, une tablette tactile, un bouton...

Le banc d'essais 10 peut comprendre un contrôleur 15, le cas échéant en communication avec l'interface homme-machine de commande 13, la motorisation 12 et/ou avec le ou les actionneurs 52, 65 éventuels.

Le contrôleur 15 peut comprendre par exemple au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur...

Le contrôleur 15 est configuré pour mettre en oeuvre un procédé d'essais de l'invention, éventuellement en fonction de signaux émis par l'interface homme-machine de commande 13.

Ce procédé d'essais peut présenter une étape de réglage comportant le réglage STP0 de la position de la butée 60, voire le cas échéant d'une masse d'équilibrage. Par exemple, un opérateur choisit un stoppeur 71 parmi un jeu 70 de stoppeur 71 devant former la butée 60. Par exemple, un opérateur fixe la butée 60 au porteur 30 dans la position choisie ou déplace la butée 60 en sollicitant l'actionneur de déplacement 65. Par exemple, un opérateur manoeuvre l'interface homme-machine de commande 13 qui transmet un signal de commande au contrôleur 15, le contrôleur 15 étant configuré pour transmettre un signal mettant en mouvement l'actionneur de déplacement 65.

Ce procédé d'essais comporte dès lors une fixation STP1 de la structure porteuse 1 à l'armature 11 du banc d'essais 10 et la fixation STP2 du simulateur 20 à la structure porteuse 1 en lieu et place du rotor.

Dès lors, le procédé d'essais comporte une mise en rotation STP3 du simulateur 20. Par exemple, un opérateur manoeuvre l'interface homme-machine de commande 13 qui transmet un signal de commande au contrôleur 15. Le contrôleur 15 est configuré pour transmettre un signal mettant en mouvement la motorisation 12.

En référence à la figure 6, le procédé comporte ensuite une libération STP4 de la masselotte 40 par rapport au porteur 30 en sollicitant le bloqueur 50. Le cas échéant, la goupille 51 est extraite selon la flèche F1 de la masselotte 40.

Une fois libérée, la masselotte 40 se déplace, en translation selon l'exemple particulier illustré, dans le chemin 33 sous l'effet de la force centrifuge, jusqu'à ce que la butée 60 la bloque dans sa position finale POS2, soit directement soit indirectement suivant la réalisation. Le déplacement de la masselotte 40 déséquilibre le simulateur 20. Le balourd du simulateur 20 génère alors des vibrations dans la structure porteuse 1 testée. Le ou les senseurs 16 peuvent mesurer ces vibrations.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et des revendications.

Par exemple, la réalisation des figures 1 et 2 peut être dépourvue d'une masse d'équilibrage voire d'une découpure d'équilibrage. Selon un autre exemple, la réalisation des figures 3 et 4 peut être pourvue d'une découpure d'équilibrage voire d'une masse d'équilibrage. Par exemple, la réalisation des figures 5 et 6 peut comprendre un chemin ménagé au moins en partie dans le porteur, et/ou un actionneur de déplacement selon la figure 3, une masse d'équilibrage ou autres. Ces divers exemples sont donnés à titre illustratif uniquement.

## Revendications

1. Simulateur (20) de balourd soudain d'un rotor,
**caractérisé en ce que** le simulateur (20) comporte un porteur (30) configuré pour effectuer un mouvement rotatif (ROT) autour d'un axe de rotation (AX1), **caractérisé en ce que** le simulateur (20) ayant au moins une masselotte (40) mobile le long d'un chemin (33) par rapport au porteur (30) entre une position initiale (POS1) et une position finale (POS2), une distance (DIS) séparant radialement la masselotte de l'axe de rotation (AX1) variant entre la position initiale (POS1) et la position finale (POS2), le simulateur (20) ayant un bloqueur (50) commandé immobilisant sur requête la masselotte (40) par rapport au porteur (30) dans la position initiale (POS1), ledit simulateur (20) ayant une butée (60), ladite butée (60) bloquant la masselotte (40) dans la position finale (POS2) suite à un déplacement de la masselotte (40) provoquée par une force centrifuge (F2) lorsque simultanément le porteur (30) est en rotation autour de l'axe de rotation (AX1) et ledit bloqueur (50) libère la masselotte (40).

2. Simulateur selon la revendication 1,
**caractérisé en ce que** le porteur (30) comporte une glissière (39) formant ledit chemin (33).

3. Simulateur selon l'une quelconque des revendications 1 à 2, **caractérisé en ce que** ledit simulateur (20) comporte au moins un bras de guidage (80) mobile par rapport au porteur (30) et connecté à la masselotte (40).

4. Simulateur selon la revendication 3,
**caractérisé en ce que** ledit bras de guidage (80) est mobile en rotation autour d'un axe de pivotement (AXP) décalé par rapport à l'axe de rotation (AX1).

5. Simulateur selon la revendication 3,
**caractérisé en ce qu'**une position dudit axe de pivotement (AXP) par rapport à l'axe de rotation (AX1) est réglable.

6. Simulateur selon l'une quelconque des revendications 1 à 5, **caractérisé en ce que** ledit axe de rotation (AX1) traverse la masselotte (40) dans ladite position initiale (POS1).

7. Simulateur selon l'une quelconque des revendications 1 à 6, **caractérisé en ce que** ledit bloqueur (50) comporte une goupille (51), ladite goupille (51) s'étendant dans un premier orifice (43) du porteur (30) et un deuxième orifice (42) de la masselotte (40) dans la position initiale (POS1).

8. Simulateur selon la revendication 7,
**caractérisé en ce que** ledit bloqueur (50) comporte un actionneur de libération (52) relié à la goupille (51) et configuré pour mettre en translation sur requête ladite goupille (51) par rapport au porteur (30).

9. Simulateur selon l'une quelconque des revendications 7 à 8, **caractérisé en ce que** ladite goupille (51) s'étend le long d'un axe de libération (AX3) parallèle à l'axe de rotation (AX1).

10. Simulateur selon l'une quelconque des revendications 1 à 9, **caractérisé en ce que** ledit simulateur (20) comporte un jeu (70) de stoppeurs (71), ledit jeu (70) de stoppeurs (71) comprenant plusieurs stoppeurs (71) différents, ladite butée (60) utilisée lors d'un test étant un desdits stoppeurs (71).

11. Simulateur selon l'une quelconque des revendications 1 à 10, **caractérisé en ce que** ladite butée (60) a une position réglable par rapport au porteur.

12. Simulateur selon la revendication 11,
**caractérisé en ce que** ledit simulateur (20) comporte un actionneur de déplacement (65) relié à ladite butée (60) et configuré pour déplacer ladite butée (60) par rapport au porteur.

13. Simulateur selon l'une quelconque des revendications 1 à 12, **caractérisé en ce que** ledit simulateur (20) comporte au moins une masse d'équilibrage (75) permettant de régler une position d'un centre de gravité (CG) de ce simulateur (20).

14. Banc d'essais (10) pour tester une structure porteuse (1) apte à porter un rotor susceptible de présenter un balourd,
**caractérisé en ce que** le banc d'essais (10) comporte une armature (11) configurée pour être attachée à la structure porteuse (1), le banc d'essais (10) comportant un simulateur (20) selon l'une quelconque des revendications 1 à 13 installé sur la structure porteuse (1) à tester à la place dudit rotor.

15. Procédé pour tester une structure porteuse (1) apte à porter un rotor susceptible de présenter un balourd,
**caractérisé en ce que** le procédé comporte une fixation (STP1) de la structure porteuse (1) à une armature (11) d'un banc d'essais (10) selon la revendication 13, une fixation (STP2) du simulateur (20) à la structure porteuse (1) en lieu et place du rotor, une mise en rotation (STP3) du simulateur (20) puis une libération (STP4) de la masselotte (40) par rapport au porteur en sollicitant le bloqueur (50).

## Patentansprüche

1. Simulator (20) für eine plötzliche Unwucht eines Rotors,
**dadurch gekennzeichnet, dass** der Simulator (20) einen Träger (30) umfasst, der konfiguriert ist, um eine Drehbewegung (ROT) um eine Drehachse (AX1) auszuführen, **dadurch gekennzeichnet, dass**
der Simulator (20) mindestens ein Fliehgewicht (40) aufweist, das in Bezug auf den Träger (30) entlang einer Bahn (33) zwischen einer Anfangsposition (POS1) und einer Endposition (POS2) beweglich ist, wobei ein Abstand (DIS), der das Fliehgewicht radial von der Drehachse (AX1) trennt, zwischen der Anfangsposition (POS1) und der Endposition (POS2) variiert, wobei der Simulator (20) eine gesteuerte Sperre (50) aufweist, die auf Anforderung das Fliehgewicht (40) in Bezug auf den Träger (30) in der Anfangsposition (POS1) fixiert, wobei der Simulator (20) einen Anschlag (60) aufweist, wobei der Anschlag (60) nach einer durch eine Zentrifugalkraft (F2) verursachten Verschiebung des Fliehgewichts (40), wenn gleichzeitig der Träger (30) um die Drehachse (AX1) gedreht wird und der Blockierer (50) das Fliehgewicht (40) freigibt, das Fliehgewicht (40) in der Endposition (POS2) blockiert.

2. Simulator nach Anspruch 1,
**dadurch gekennzeichnet, dass** der Träger (30) eine Gleitschiene (39) umfasst, die die Bahn (33) bildet.

3. Simulator nach einem der Ansprüche 1 bis 2,
**dadurch gekennzeichnet, dass** der Simulator (20) mindestens einen Führungsarm (80) umfasst, der in Bezug auf den Träger (30) beweglich und mit dem Fliehgewicht (40) verbunden ist.

4. Simulator nach Anspruch 3,
**dadurch gekennzeichnet, dass** der Führungsarm (80) um eine Schwenkachse (AXP) drehbar ist, die gegenüber der Drehachse (AX1) versetzt ist.

5. Simulator nach Anspruch 3,
**dadurch gekennzeichnet, dass** eine Position der Schwenkachse (AXP) in Bezug auf die Drehachse (AX1) einstellbar ist.

6. Simulator nach einem der Ansprüche 1 bis 5,
**dadurch gekennzeichnet, dass** in der Anfangsposition (POSI) die Drehachse (AX1) durch das Fliehgewicht (40) verläuft.

7. Simulator nach einem der Ansprüche 1 bis 6,
**dadurch gekennzeichnet, dass** die Sperre (50) einen Stift (51) aufweist, wobei sich der Stift (51) in der Anfangsposition (POS1) in einer ersten Öffnung (43) des Trägers (30) und einer zweiten Öffnung (42) des Fliehgewichts (40) erstreckt.

8. Simulator nach Anspruch 7,
**dadurch gekennzeichnet, dass** die Sperre (50) einen Freigabeaktuator (52) aufweist, der mit dem Stift (51) verbunden und konfiguriert ist, um auf Anforderung den Stift (51) in Bezug auf den Träger (30) zu verschieben.

9. Simulator nach einem der Ansprüche 7 bis 8,
**dadurch gekennzeichnet, dass** sich der Stift (51) entlang einer zur Drehachse (AX1) parallelen Freigabeachse (AX3) erstreckt.

10. Simulator nach einem der Ansprüche 1 bis 9,
**dadurch gekennzeichnet, dass** der Simulator (20) einen Satz (70) von Stoppern (71) aufweist, wobei der Satz (70) von Stoppern (71) mehrere verschiedene Stopper (71) umfasst und der bei einem Test verwendete Stopper (60) einer der Stopper (71) ist.

11. Simulator nach einem der Ansprüche 1 bis 10,
**dadurch gekennzeichnet, dass** der Stopper (60) eine in Bezug auf den Träger einstellbare Position hat.

12. Simulator nach Anspruch 11,
**dadurch gekennzeichnet, dass** der Simulator (20) einen Bewegungsaktuator (65) umfasst, der mit dem Anschlag (60) verbunden und konfiguriert ist, um den Anschlag (60) relativ zum Träger zu bewegen.

13. Simulator nach einem der Ansprüche 1 bis 12,
**dadurch gekennzeichnet, dass** der Simulator (20) mindestens eine Ausgleichsmasse (75) aufweist, die es ermöglicht, eine Position eines Schwerpunkts (CG) des Simulators (20) einzustellen.

14. Prüfstand (10) zum Testen einer Tragstruktur (1), die geeignet ist, einen Rotor zu tragen, der eine Unwucht aufweisen kann,
**dadurch gekennzeichnet, dass** der Prüfstand (10) eine Armatur (11) umfasst, die konfiguriert ist, um an der Tragstruktur (1) befestigt zu werden, und der Prüfstand (10) einen Simulator (20) nach einem der Ansprüche 1 bis 13 umfasst, der an der zu prüfenden Tragstruktur (1) anstelle des Rotors installiert ist.

15. Verfahren zum Testen einer Tragstruktur (1), die geeignet ist, einen Rotor zu tragen, der eine Unwucht aufweisen kann,
**dadurch gekennzeichnet, dass** das Verfahren ein Befestigen (STP1) der Tragstruktur (1) an einer Armatur (11) eines Prüfstands (10) nach Anspruch 13, ein Befestigen (STP2) des Simulators (20) an der Tragstruktur (1) anstelle des Rotors, ein Drehen (STP3) des Simulators (20) und dann ein Freigeben (STP4) des Gewichts (40) in Bezug auf den Träger durch Belasten der Sperre (50) umfasst.

## Claims

1. Unbalance simulator of a rotor (20),
**characterized in that** the simulator (20) comprises a carrier (30) configured to perform a rotational movement (ROT) about a rotational axis (AX1), **characterized in that**
the simulator (20) having at least one counterweight (40) movable along a path (33) relative to the carrier (30) between an initial position (POS1) and a final position (POS2), a distance (DIS) radially separating the counterweight from the rotational axis (AX1) varying between the initial position (POS1) and the final position (POS2), the simulator (20) having a blocker (50) controlled by immobilizing the counterweight (40) relative to the carrier (30) in the initial position (POS1), said simulator (20) having a stopper (60), said stopper (60) blocking the counterweight (40) in the final position (POS2) following a displacement of the counterweight (40) caused by a centrifugal force (F2) when the carrier (30) is simultaneously rotating about the rotational axis (AX1) and said blocker (50) releases the counterweight (40).

2. Simulator according to Claim 1,
**characterized in that** the carrier (30) comprises a slide (39) forming said path (33).

3. Simulator according to any one of Claims 1 to 2,
**characterized in that** said simulator (20) comprises at least one guiding arm (80) movable relative to the carrier (30) and connected to the counterweight (40).

4. Simulator according to Claim 3,
**characterized in that** said guiding arm (80) is movable in rotation about a pivot axis (AXP) offset relative to the rotational axis (AX1).

5. Simulator according to Claim 3,
**characterized in that** a position of said pivot axis (AXP) relative to the rotational axis (AX1) is adjustable.

6. Simulator according to any one of claims 1 to 5,
**characterized in that** said rotational axis (AX1) passes through the counterweight (40) in said initial position (POS1).

7. Simulator according to any one of Claims 1 to 6,
**characterized in that** said blocker (50) comprises a pin (51), said pin (51) extending into a first orifice (43) of the carrier (30) and a second orifice (42) of the counterweight (40) in the initial position (POS1).

8. Simulator according to Claim 7,
**characterized in that** said blocker (50) comprises a release actuator (52) connected to the pin (51) and configured to translate said pin (51) relative to the carrier (30) on request.

9. Simulator according to any one of Claims 7 to 8,
**characterized in that** said pin (51) extends along a release axis (AX3) parallel to the rotational axis (AX1).

10. Simulator according to any one of Claims 1 to 9,
**characterized in that** said simulator (20) comprises a set (70) of stoppers (71), said set (70) of stoppers (71) comprising several different stoppers (71), said stopper (60) used during a test being one of said stoppers (71).

11. Simulator according to any one of Claims 1 to 10,
**characterized in that** said stopper (60) has an adjustable position relative to the carrier.

12. Simulator according to Claim 11,
**characterized in that** said simulator (20) comprises a displacement actuator (65) connected to said stopper (60) and configured to move said stopper (60) relative to the carrier.

13. Simulator according to any one of Claims 1 to 12,
**characterized in that** said simulator (20) comprises at least one balancing weight (75) allowing adjustment of a position of a centre of gravity (CG) of said simulator (20).

14. Test bench (10) for testing a supporting structure (1) capable of carrying a rotor susceptible to being unbalanced,
**characterized in that** the test bench (10) comprises a frame (11) configured to be attached to the supporting structure (1), the test bench (10) comprising a simulator (20) according to any one of Claims 1 to 13 installed on the supporting structure (1) to be tested in place of said rotor.

15. Method for testing a supporting structure (1) capable of carrying a rotor susceptible to being unbalanced,
**characterized in that** the method comprises fixing (STP1) the supporting structure (1) to a frame (11) of a test bench (10) according to Claim 13, fixing (STP2) the simulator (20) to the supporting structure (1) in place of the rotor, rotating (STP3) the simulator (20) and then releasing (STP4) the counterweight (40) relative to the carrier by activating the blocker (50).
